# EUROPÄISCHE PATENTSCHRIFT

(11) **EP 1 119 893 B1**
(45) Veröffentlichungstag und Bekanntmachung des Hinweises auf die Patenterteilung: **27.11.2002**
(21) Anmeldenummer: 99969855.8
(22) Anmeldetag: 17.09.1999
(51) Int. Cl.: H02J 3/18

(54) **ANORDNUNG ZUR ENERGIEVERSORGUNG EINER MIT EINEM VERSORGUNGSNETZ VERBUNDENEN LAST**
SYSTEM FOR SUPPLYING POWER TO A LOAD CONNECTED TO A DISTRIBUTION NETWORK
SYSTEME POUR ALIMENTER EN ENERGIE UNE CHARGE RELIEE A UN RESEAU DE DISTRIBUTION

(30) Priorität: 29.09.1998 DE 19844750
(43) Veröffentlichungstag der Anmeldung: 01.08.2001
(73) Patentinhaber: SIEMENS AKTIENGESELLSCHAFT, 80333 München (DE)
(72) Erfinder: DOHT, Hans-Christian, D-91052 Erlangen (DE); HILSCHER, Martin, D-91052 Erlangen (DE); WOKUSCH, Michael, D-91301 Forchheim (DE)
(86) Internationale Anmeldenummer: DE9902948
(87) Internationale Veröffentlichungsnummer: WO00019576

(56) Entgegenhaltungen:
- US-A- 5 329 222
- US-A- 5 698 969

## Beschreibung

Die Erfindung betrifft eine Anordnung zur Energieversorgung einer mit einem Versorgungsnetz verbundenen Last gemäß dem Oberbegriff des Anspruchs 1 (US 5,329,222).

Zur Aufrechterhaltung der Energieversorgung einer mit einem elektrischen Versorgungsnetz verbundenen Last ist es aus der US 5,329,222 bekannt, seriell zwischen dem Versorgungsnetz und der Last eine Zusatzspannung einzuspeisen, wenn die Spannung des Versorgungsnetzes absinkt oder ausfällt. Die Zusatzspannung wird dabei über einen seriellen Transformator, auch Längstransformator genannt, seriell eingespeist. Dabei wird dem Transformator Energie von einem Energiespeicher zugeführt.

Aus der US 5,514,915 ist eine ähnliche Anordnung bekannt, bei der die Einspeisung der stützenden Energie parallel erfolgt. Diese Anordnung wird auch als "shunt connected" bezeichnet. Problematisch bei dieser Anordnung ist, daß bei einem Fehler im Versorgungsnetz Energie oder Scheinleistung gegebenenfalls nicht zur Last sondern in den Fehler des Versorgungsnetzes fließt.

Aus Patent Abstracts of Japan: E-747, 1989, Vol. 13/No. 168, JP 64-1434 ist ein System bekannt, mit dem momentane elektrische Spannungsabfälle auf einer Energieversorgungsleitung durch Abgeben einer Spannung kompensiert werden. Das System umfaßt einen Umrichter, der über einen Transformator seriell in eine Energieversorgungsleitung geschaltet ist, die eine Energiequelle mit einer Last verbindet. Der Transformator weist zwei Wicklungen auf, von denen eine Wicklung seriell in die Leitung geschaltet ist. Bei einem Spannungsabfall auf der Energieversorgungsleitung wird der Umrichter gestartet, wobei aus einer nicht näher dargestellten Gleichspannungsquelle elektrische Energie entnommen und über den Transformator als die Spannung an die Energieversorgungsleitung abgegeben wird.

Der Erfindung liegt die Aufgabe zugrunde, eine Anordnung zur Stützung der Energieversorgung einer mit einem Versorgungsnetz verbundenen Last anzugeben, die bei paralleler Ankopplung an die Last weitgehend von dem Versorgungsnetz entkoppelt ist.

Die Lösung der Aufgabe gelingt erfindungsgemäß mit den Merkmalen des Anspruchs 1. Ausgehend vom Stand der Technik ist dabei vorgesehen, daß der Energiespeicher in Serie mit der zweiten Wicklung an das lastseitige Ende der ersten Wicklung angeschlossen ist, wobei die beiden Wicklungen bei gleicher Stromflußrichtung bezogen zur Last einander entgegenwirkende magnetische Felder aufweisen. Damit ist eine Entkopplung nach Art einer Duplex-Drossel gebildet.

Auf diese Weise ist die Impedanz zwischen der Anordnung und dem Versorgungsnetz gegenüber der Impedanz zwischen Vorrichtung und Last wesentlich erhöht, so daß quasi eine Entkopplung zwischen Anordnung und Versorgungsnetz gegeben ist. Gegenseitige Beeinflussungen sind dadurch gering gehalten, wobei die Versorgungsspannung für die Last stabil gehalten werden kann.

Prinzipiell sind Duplex-Drosseln aus dem Stand der Technik bekannt. Dort werden sie auch als Stromteiler, Stromteiler-Drosselspulen, Ausgleichs- oder Kompensationsdrosseln oder Glättungsdrossel mit Mittelanzapfung bezeichnet. Aus der Literaturstelle "Netzgestaltung mit Duplex-Drosseln", STG-Sprechtag des FA Elektrotechnik, am 16.04.1997, Bremerhaven, Verfasser Planitz W und Schild W, ist der Einsatz von Duplex-Drosseln bei der Bordnetzgestaltung auf Schiffen bekannt.

Aus der Literaturstelle "Moderne Bordnetzkonzepte", Handbuch der Werften, Band XXI, S. 66 - 67, 1992, Schiffahrtsverlag Hansa, ist ein Einsatz von Duplex-Drosseln bekannt, bei dem von einem oder mehreren Einspeisen Energie auf zwei Teilnetze verteilt wird/werden. Die Duplex-Drosseln werden so ausgelegt, daß im ungestörten Betrieb die beiden Zweige der Drosseln von Strömen solcher Höhe durchflossen werden, daß magnetische Wirkungen der Ströme sich aufheben.

Mit Vorteil können die beiden Wicklungen auf einen gemeinsamen Eisenkern angeordnet sein. Damit ist eine enge magnetische Kopplung gegeben. Alternativ ist auch eine Ausführung als Luftspule möglich. Damit sind bei einfacher Fertigung gegenüber einer Eisenkernausführung Sättigungsprobleme vermieden. Die beiden Wicklungen können etwa gleich groß ausgeführt sein. Damit ergeben sich in etwa symmetrische Impedanzverhältnisse.

Es ist günstig, wenn die beiden Wicklungen magnetisch parallel und elektrisch antiparallel geschaltet sind. Damit ist eine einfache Verschaltung der Anordnung gegeben. Mit Vorteil weist der Energiespeicher eine Energiezelle oder ein Speicherelement und einen Umrichter auf, wobei das Speicherelement als supraleitender Energiespeicher, Batterie, Kondensator, Schwungrad oder Brennstoffzelle ausgebildet sein kann. Damit ist die Anordnung an vielfältige Einsatzbedingungen anpassbar.

Bei der vorliegenden erfindungsgemäßen Anordnung sind die Ströme in den beiden Zweigen oder Wicklungen der Duplex-Drossel bei der ungestörten Versorgung der Last ungleich, wobei sich die magnetischen Wirkungen der Wicklungen nicht aufheben. Der Strom durch die zweite Wicklung kann dabei null sein. Erst im Fehler- oder Störfall fließt hier ein Strom. In diesem Fall sind die beiden Einspeiser (Versorgungsnetz und Energiespeicher) - anders als in den obengenannten Bordnetzanwendungen - über die Duplex-Drossel entkoppelt.

Durch die antiparallel durchflossenen Wicklungen wirkt zwischen dem Energiespeicher und dem Versorgungsnetz eine, z.B. bei gleichen Windungszahlen um den Faktor 4, größere Induktivität als die Induktivität zwischen Versorgungsnetz und Last oder Anordnung und Last. Durch die Entkopplung ist auch eine Übertragung von Störungen nach Art von Harmonischen vom Versorgungsnetz zur Last oder umgekehrt oder vom Umrichter zum Versorgungsnetz wirksam verhindert.

Ein.Ausführungsbeispiel der Erfindung, weitere Vorteile und Details werden nachfolgend anhand der Zeichnung näher erläutert. Es zeigen:
- FIG 1: eine erfindungsgemäße Anordnung und
- FIG 2: die Anordnung gemäß FIG 1 in einer Ersatzschaltbilddarstellung.

In den nachfolgend beschriebenen Figuren sind gleiche Details mit gleichen oder zumindest sinngemäß gleichen Bezugszeichen bezeichnet.

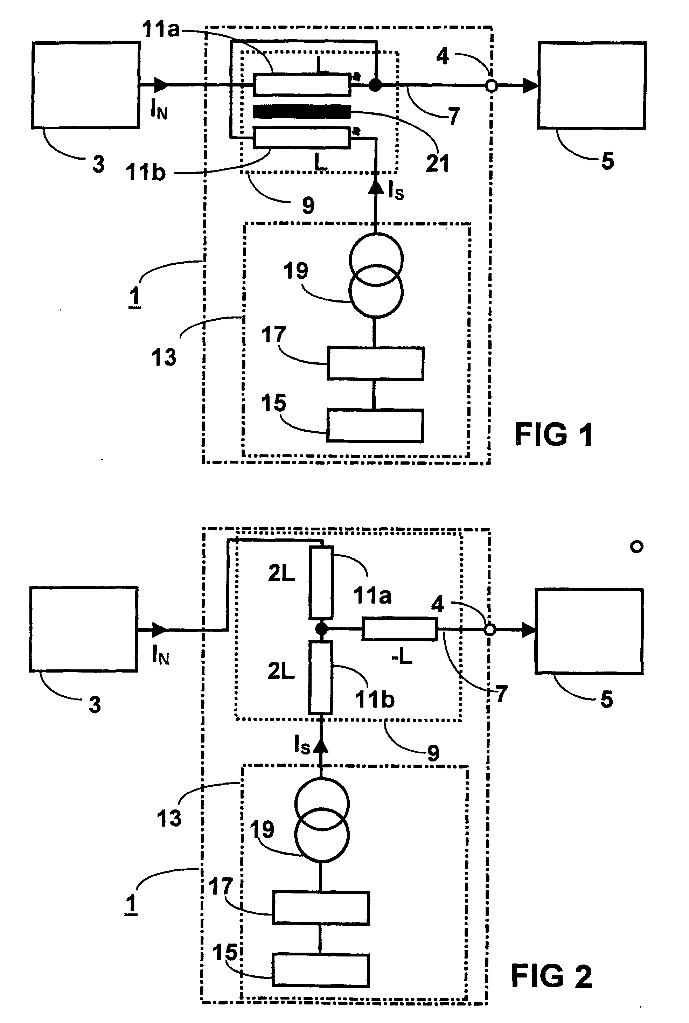

FIG 1 zeigt eine Anordnung 1 zur Energieversorgung einer mit einem elektrischen Versorgungsnetz 3 verbundenen Last 5. Bei der Last 5 kann es sich beispielsweise um einen Mittel- oder Hochspannungsverbraucher, z.B. einen Industrieverbraucher oder eine Fabrik, handeln. Die Last 5 hat dabei hohe Anforderungen an eine sichere gleichmäßige Energieversorgung an ihrem Anschlußpunkt 4 aus dem elektrischen Versorgungsnetz 3. Dies ist insbesondere für Produktionsprozesse wichtig, bei denen keine Unterbrechung oder Störung der Energieversorgung auftreten darf. Als Beispiel hierzu kann die Herstellung von Halbleiterbauteilen genannt werden.

Die Last 5 kann dabei ein- oder mehrphasig, insbesondere zum Anschluß an ein Drehstromnetz, ausgebildet sein. Das Versorgungsnetz 3 ist dann entsprechend ausgelegt.

In die die Last 5 mit dem Versorgungsnetz 3 verbindende Leitung 7 ist vorliegend ein zur Anordnung 1 gehöriges induktives Element 9 geschaltet. Das induktive Element 9 ist bevorzugt als Duplex-Drossel ausgeführt. Es weist eine erste und eine zweite Wicklung 11a bzw. 11b auf. Die beiden Wicklungen 11a und 11b weisen jeweils ein erstes und ein zweites Ende auf, wobei vorliegend die ersten Enden jeweils mit einem Punkt gekennzeichnet sind.

Die erste Wicklung 11a ist seriell in die Leitung 7 zwischen das Versorgungsnetz 3 und der Last 5 geschaltet. Die zweite Wicklung 11b verbindet die Last 5 mit einem Energiespeicher 13, der zur Stützung oder Aufrechterhaltung der Energieversorgung für die Last 5 im Fehler- oder Störfall dient. Der Energiespeicher 13 kann auch als Scheinleistungsquelle oder zur Spannungsstützung angesehen werden und umfaßt zumindest ein Speicherelement 15, welches beispielsweise als Batterie, Schwungrad, Brennstoffzelle, Kondensator, Dieselgenerator oder supraleitender, insbesondere magnetischer, Energiespeicher, also als mechanischer, elektrischer oder chemischer Energiespeicher ausgebildet sein kann.

Zur Anpassung der Spannungs- und Stromverhältnisse und zur Steuerung der Energieflüsse kann der Energiespeicher 13 optional ein Ankoppelgerät, insbesondere einen Umrichter 17 und/oder einen Transformator 19, umfassen. Der Einsatz und die Auslegung dieser Bauelemente sind allgemein aus dem Stand der Technik bekannt und werden vorliegend nicht weiter beschrieben. Das Ankoppelgerät kann im einfachsten Fall als Schalter ausgebildet sein, wobei bevorzugt Ausführungen mit Umrichter oder Steller zur Anwendung kommen. Damit ist eine Ausbildung des Energiespeichers 13 als Wirk- oder Scheinleistungsquelle möglich.

Die beiden Wicklungen 11a und 11b sind vorliegend beispielhaft über einen Eisenkern 21 magnetisch eng miteinander gekoppelt und mechanisch parallel zueinander angeordnet.

Selbstverständliche ist auch eine Ausführung ohne Eisenkern möglich. Elektrisch sind die beiden Wicklungen 11a und 11b antiparallel geschaltet. Dies wird aus den eingezeichneten Stromflußrichtungen I_{N} und I_{S} deutlich. Während von dem Versorgungsnetz 3 die Stromflußrichtung I_{N} in der ersten Wicklung 11a von dem zweiten Ende zu dem ersten Ende (die ersten Enden der Wicklungen sind jeweils mit einem Punkt gekennzeichnet) erfolgt liegt die Stromflußrichtung I_{S} für die zweite Wicklung 11b in Richtung von dem ersten Ende zum zweiten Ende. Das zweite Ende der zweiten Wicklung 11b ist also elektrisch mit dem ersten Ende der ersten Wicklung 11a verbunden. Damit wirken die Ströme I_{N} und I_{S} in diesen beiden Wicklungen 11a bzw. 11b über ihre Felder einander entgegen.

FIG 2 zeigt eine Darstellung der Anordnung 1 gemäß FIG 1 im Ersatzschaltbild, wobei die Impedanzverhältnisse deutlich werden. Aufgrund der Ausgestaltung des induktiven Elements 9 ergibt sich bei gleichen Windungsverhältnissen der beiden Wicklungen 11a und 11b zwischen dem Netz und dem Energiespeicher 13 eine Impedanz von 2L + 2L = 4L. Zwischen dem Versorgungsnetz 3 oder dem Energiespeicher 13 und der Last 5 ergibt sich in diesem Fall jeweils eine Impedanz von 2L - L = L. Damit ist die Impedanz zwischen dem Versorgungsnetz 3 und dem gegebenenfalls als Scheinleistungsquelle dienenden Energiespeicher 13 um den Faktor 4 höher als jeweils zwischen diesen beiden Elementen und der Last 5. Damit ist eine hohe Entkopplung zwischen dem Versorgungsnetz 3 und dem Energiespeicher 13 gegeben. Gegenseitige Beeinflussungen sind damit gering gehalten.

Eine Duplex-Drossel ist ein Spezialtransformator mit zwei Wicklungen bevorzugt geringer Streuinduktivität. Die Wicklungen 11a und 11b werden antiparallel von den Strömen I_{N} und I_{S} durchflossen. Im vorliegenden Fall muß die Duplex-Drossel für einen einseitigen Stromfluß, bei dem also im wesentlichen der volle Laststrom über eine Wicklung fließt, ausgelegt werden. Die zwischen dem Energiespeicher 13 und der Last 5 wirkende Impedanz des induktiven Elements 9 ist bei der Dimensionierung des Transformators 19 zu berücksichtigen. Das gleiche gilt auch, wenn die Last 5 und/oder die gesamte Anordnung 1 gegebenenfalls über einen Transformator an das Versorgungsnetz 3 angeschlossen ist.

Die Spannung an der Last 5 kann mit der vorliegenden Anordnung 1 bei niederimpedanten Spannungseinbrüchen deutlich besser gestützt werden. Die allgemein bekannten Vorteile für die Duplex-Drossel kommen vorliegend für die beiden Einspeiser oder Teilnetze, nämlich dem Versorgungsnetz 3 und dem Energiespeicher 13, vorteilhaft zur Anwendung. Wesentlich ist dabei, daß der Kurzschlußstrom in den jeweiligen Teilnetzen deutlich reduziert wird. Darüber hinaus wird die Spannung bei dynamischen Vorgängen im nicht betroffenen Teilnetz gestützt. Außerdem ist verhindert, daß Netzrückwirkungen von einem in das andere Teilnetz gelangen.

Grundgedanke der vorliegenden Idee ist, daß ein nach Art einer Duplex-Drossel wirkendes induktives Element in Verbindung mit einer Anordnung zur Spannungsstützung oder einer Scheinleistungsquelle bei einem sensitiven Verbraucher eingesetzt wird. Mögliche Anwendungen sind z.B. statische Kompensatoren zur Spannungsstützung oder zur Blindleistungskompensation, wobei die Art des Kompensators beliebig ist. In einem solchen Fall kann der Energiespeicher 13 im oben angeführten Beispiel im Einzelfall auch lediglich einen Umrichter mit einem Kondensator als Speicherelement 15 nach Art einer Scheinleistungsquelle umfassen. Dabei können selbstgeführte U- oder I-Umrichter (beispielsweise mit GTO's oder GCT's oder IGBT's oder sonstigen geeigneten Ventilen), netzgeführte Schalter oder Steller, mechanisch geschaltete Kapazitäten oder sonstige geeignete Anordnungen zur Anwendung kommen. Durch die Verwendung des induktiven Elements ist eine günstige Entkopplung erzielt, wodurch eine Scheinleistungsvorzugsrichtung in Richtung der Last gegeben ist.

Weitere Anwendungsmöglichkeiten sind z.B. USV-ähnliche Stromversorgungen, wie sie bei großen Energien mit SMES (supraleitender magnetischer Energiespeicher), Schwungrädern oder Brennstoffzellen möglich sind. Bei Anwendungen mit einem SMES sind Energien von 10 bis etwa 1000 MVAs denkbar. Prinzipiell sind Anwendungen ohne Wirkleistungsabgabe und/oder mit einer hohen Wirkleistungsabgabe möglich.

Selbstverständlich kann wie beim Stand der Technik auch zwischen dem induktiven Element 9 und dem elektrischen Versorgungsnetz 3 noch ein Schaltelement, z.B. ein Halbleiter, eingefügt werden, um eine völlige Abkopplung der Last 5 von dem elektrischen Versorgungsnetz 3 zu ermöglichen. Hierzu ist eine Versorgung der Last 5 mit zumindest Wirkleistung erforderlich.

## Patentansprüche

1. Anordnung (1) zur Energieversorgung einer mit einem elektrischen Versorgungsnetz (3) verbundenen Last (5) mit einem Energiespeicher (13), welcher über ein induktives Element (9) mit zumindest zwei Wicklungen (11a, 11b) mit der Last (5) verbindbar ist, und wobei die erste Wicklung (11a) zur seriellen Verbindung der Last (5) mit dem Energieversorgungsnetz (3) dient, **dadurch gekennzeichnet, daß** der Energiespeicher (13) in Serie mit der zweiten Wicklung (11b) an das lastseitige Ende der ersten Wicklung (11a) angeschlossen ist, wobei die beiden Wicklungen (11a, 11b) bei gleicher Stromflußrichtung (I_{N}, I_{S}) bezogen zur Last (5) einander entgegenwirkende magnetische Felder aufweisen.

2. Anordnung nach Anspruch 1, **dadurch gekennzeichnet, daß** die beiden Wicklungen (11a, 11b) durch einen Eisenkern (21) miteinander gekoppelt sind.

3. Anordnung nach Anspruch 1 oder 2, **dadurch gekennzeichnet, daß** die beiden Wicklungen (11a, 11b) etwa gleich groß dimensioniert sind.

4. Anordnung nach einem der vorhergehenden Ansprüche, **dadurch gekennzeichnet, daß** die beiden Wicklungen (11a, 11b) magnetisch parallel und elektrisch antiparallel geschaltet sind.

5. Anordnung nach einem der vorhergehenden Ansprüche, **dadurch gekennzeichnet, daß** der Energiespeicher (13) zumindest ein Speicherelement(15) und ein Ankoppelgerät umfaßt.

6. Anordnung nach Anspruch 5, **dadurch gekennzeichnet, daß** das Speicherelement(15) als supraleitender Energiespeicher, Kondensator, Batterie, Schwungrad oder Brennstoffzelle ausgebildet ist.

7. Anordnung nach Anspruch 5 oder 6, **dadurch gekennzeichnet, daß** das Ankoppelgerät einen Umrichter (17) umfaßt.

## Claims

1. Arrangement (1) for supplying power to a load (5) connected to an electrical power supply network (3), having an energy store (13) which can be connected via an inductive element (9) having at least two windings (11a, 11b) to the load (5), and with the first winding (11a) being used for connecting the load (5) in series with the power supply network (3), **characterized in that** the energy store (13) is connected in series with the second winding (11b) to the load-side end of the first winding (11a), with the two windings (11a, 11b) having magnetic fields which counteract one another with the same current flow direction (I_{N}, I_{S}) with respect to the load (5).

2. Arrangement according to Claim 1, **characterized in that** the two windings (11a, 11b) are coupled to one another by means of an iron core (21).

3. Arrangement according to Claim 1 or 2, **characterized in that** the two windings (11a, 11b) are designed to be approximately the same size.

4. Arrangement according to one of the preceding claims, **characterized in that** the two windings (11a, 11b) are connected magnetically in parallel and electrically in parallel but in opposite senses.

5. Arrangement according to one of the preceding claims, **characterized in that** the energy store (13) comprises at least one energy-storage element (15) and one coupling appliance.

6. Arrangement according to Claim 5, **characterized in that** the energy-storage element (15) is in the form of a superconducting energy store, capacitor, battery, flywheel or fuel cell.

7. Arrangement according to Claim 5 or 6, **characterized in that** the coupling appliance comprises a converter (17).

## Revendications

1. Dispositif (1) pour l'alimentation en énergie d'une charge (5) reliée à un réseau (3) d'alimentation électrique et comportant un dispositif (13) de stockage d'énergie, qui peut être relié à la charge (5) par l'intermédiaire d'un élément (9) inductif comportant au moins deux bobines (11a, 11b), la première bobine (11a) servant à une liaison en série de la charge (5) avec le réseau (3) d'alimentation en énergie, **caractérisé en ce que** le dispositif (13) de stockage d'énergie est raccordé en série à la deuxième bobine (11b) à l'extrémité du côté de la charge de la première bobine (11a), les deux bobines (11a, 11b) ayant, pour une même direction de conduction du courant (I_{N}, I_{S}), rapportée à la charge (5) des champs magnétiques opposés.

2. Dispositif suivant la revendication 1, **caractérisé en ce que** les deux bobines (11a, 11b) sont mutuellement couplées par un noyau (21) en fer).

3. Dispositif suivant la revendication 1 ou 2, **caractérisé en ce que** les deux bobines (11a, 11b) sont dimensionnées sensiblement à la même grandeur.

4. Dispositif suivant l'une des revendications précédentes, **caractérisé en ce que** les deux bobines (11a, 11b) sont montées magnétiquement en parallèle et électriquement anti-parallèlement.

5. Dispositif suivant l'une des revendications précédentes, **caractérisé en ce que** le dispositif (13) de stockage d'énergie comporte au moins un élément (15) de stockage et un appareil d'accouplement.

6. Dispositif suivant la revendication 5, **caractérisé en ce que** le l'élément (15) de stockage est formé en tant que dispositif supraconducteur de stockage d'énergie, de condensateur, de batterie, de volant ou de pile à combustible.

7. Dispositif suivant la revendication 5 ou 6, **caractérisé en ce que** l'appareil d'accouplement comporte un changeur de fréquence (17).
